# FASCICULE DE BREVET EUROPEEN

(11) **EP 0 800 772 B1**
(45) Date de publication et mention de la délivrance du brevet: **25.07.2001**
(21) Numéro de dépôt: 96200987.4
(22) Date de dépôt: 12.04.1996
(51) Int. Cl.: A23G 9/28, A23G 9/02

(54) **Procédé et dispositif de fabrication de confiserie glacée extrudée**
Verfahren und Vorrichtung zur Herstellung von extrudierter Speiseeis
Process and apparatus for manufacturing extruded ice confection

(43) Date de publication de la demande: 15.10.1997
(73) Titulaire: SOCIETE DES PRODUITS NESTLE S.A., 1800 Vevey (CH)
(72) Inventeur: Daouse, Alain, 60430 Noailles (FR)
(74) Mandataire: Archambault, Jean

(56) Documents cités:
- EP-A- 0 044 689
- EP-A- 0 293 022
- BE-A- 624 881
- FR-A- 1 420 328
- FR-A- 2 497 728
- GB-A- 505 472
- GB-A- 1 076 117
- GB-A- 1 169 500
- US-A- 1 560 842
- US-A- 3 227 103
- US-A- 3 840 311
- US-A- 4 507 326

## Description

L'invention concerne un procédé et un dispositif de fabrication de confiserie glacée extrudée à teintes et parfums contrastés définissant une spirale, destiné au remplissage des portions familiales ou "vracs" ou des pots ou encore à la fabrication des sucettes glacées.

On connaît, par exemple de EP-A-0293022, un dispositif de remplissage de portions de confiserie glacée contenant une sauce ou un sirop avec lequel on produit un dessin contrasté en double spirale ou double cercles concentriques au moyen d'un arbre rotatif creux placé axialement dans un tube et comportant des ouvertures latérales, cependant que le tube comporte un élément déflecteur central au voisinage de l'ajutage de sortie. L'arbre creux produit un motif constitué de cercles concentriques de sirop que le déflecteur divise en deux sous-motifs.

Selon US-A-3227103, par exemple, on extrude deux pâtes pâtissières, chacune dans des ajutages définissant une spirale inscrite dans un contour circulaire, de manière à fabriquer des gâteaux du type des "Swiss rolls". Un tel dispositif ne permet pas la co-extrusion de deux compositions glacées sous forme d'une spirale inscrite dans un cercle avec une définition correcte du contour du motif en spirale, par ce qu'il se crée des flux préférentiels qui déforment ce motif en raison des frottements importants dans l'ajutage en forme de spirale et au centre du motif par rapport à la périphérie.

L'invention apporte une solution simple au problème posé au moyen d'un dispositif ne comportant pas de parties mobiles.

Elle concerne un procédé de fabrication de confiserie glacée par co-extrusion de compositions glacées de parfums et couleurs distincts pour former un boudin cylindrique ayant en son coeur un motif en spirale, caractérisé par le fait que l'on extrude verticalement les compositions glacées alternativement par des buses successives emboitées les unes dans les autres et de section progressive, que, chaque buse est formée de deux demi-coquilles cylindriques de section différentes, accolées par un plan médian du boudin et que la section des buses est constituée par deux demi-cercles tangentiels accolés par leurs diamètres dans ledit plan médian, à l'exception de la dernière buse de sortie dont la section est circulaire.

On entend par composition glacée dans le contexte de l'invention, une crème glacée proprement dite, plus ou moins aérée ou un sorbet ou une glace à l'eau extrudables, pas ou peu aérés.

Le boudin est de préférence découpé en portions à la sortie du dispositif d'extrusion pour être ensuite introduit dans des récipients, par exemple des bacs ou des pots qui se présentent successivement sous le dispositif et une portion constitue alors le volume exact de remplissage du récipient en question. Les récipients sont supportés par une chaîne cheminant pas à pas, de sorte qu'un récipient soit immobile pendant la durée du remplissage. En variante, on peut prévoir que le dispositif d'extrusion soit solidaire, par exemple d'un charriot mobile, de sorte qu'il accompagne un récipient pendant le remplissage, puis une fois le récipient rempli, qu'ilretourne rapidement à sa position initiale.

En variante, le boudin peut être découpé en tranches que l'on dépose sur des plaques froides cheminant en continu sous le dispositif d'extrusion et dans lesquelles on peut insérer latéralement un bâtonnet de manière à produire des sucettes glacées.

Les compositions glacées sont de préférences de parfums et couleurs contrastés et ont des propriétés rhéologiques voisines, ce que l'on peut obtenir en agissant sur le débit, la composition, le foisonnement, la température de sortie et la pression d'extrusion. En principe, ces paramètres physiques sont très proches pour les différentes compositions.

L'invention concerne également un dispositif d'extrusion de confiserie glacée par co-extrusion de compositions glacées de parfums et couleurs distincts pour former un boudin cylindrique ayant en son coeur un motif en spirale, caractérisé par le fait qu'il comprend des buses successives emboitées les unes dans les autres et de section progressive, que chaque buse est formée de deux demi-coquilles cylindriques de section différentes, accolées par un plan médian du boudin et que la section des buses est constituée par deux demi-cercles tangentiels accolés par leurs diamètres dans ledit plan médian, à l'exception de la dernière buse de sortie dont la section est circulaire.

L'invention concerne également un article de confiserie glacée extrudé de forme généralement cylindrique, caractérisé par le fait qu'il est constitué d'au moins deux compositions glacées de parfum et couleur contrastés et que celles-ci définissent dans sa section transversale un motif représentant une spirale inscrite dans un cercle.

Selon un mode de réalisation, l'article est sous la forme d'un pot généralement cylindrique avec un faible angle de dépouille, contenant un boudin cylindrique de compositions glacées dans la section duquel s'inscrit une spirale.

Selon un autre mode de réalisation, l'article est sous forme d'une sucette glacée comprenant une tranche cylindrique de compositions glacées découpée à partir du boudin sortant de l'extrudeur, dans la section de laquelle s'inscrit une spirale et dans laquelle est disposé un bâtonnet.

L'invention sera décrite en détail à l'aide des dessins annexés donnés à titre illustratif et dans lesquels:
La figure 1 est une vue schématique du poste de remplissage de récipients,
la figure 2 est une vue schématique d'une variante du poste de fabrication de bâtonnets,
la figure 3 est une coupe longitudinale du dispositif selon un plan médian,
les figures 4, 5, 6 et 7 sont des coupes latérales, respectivement selon AA, BB, CC et DD de la figure 3 et
la figure 8 est une vue en élévation d'un bâtonnet glacé.

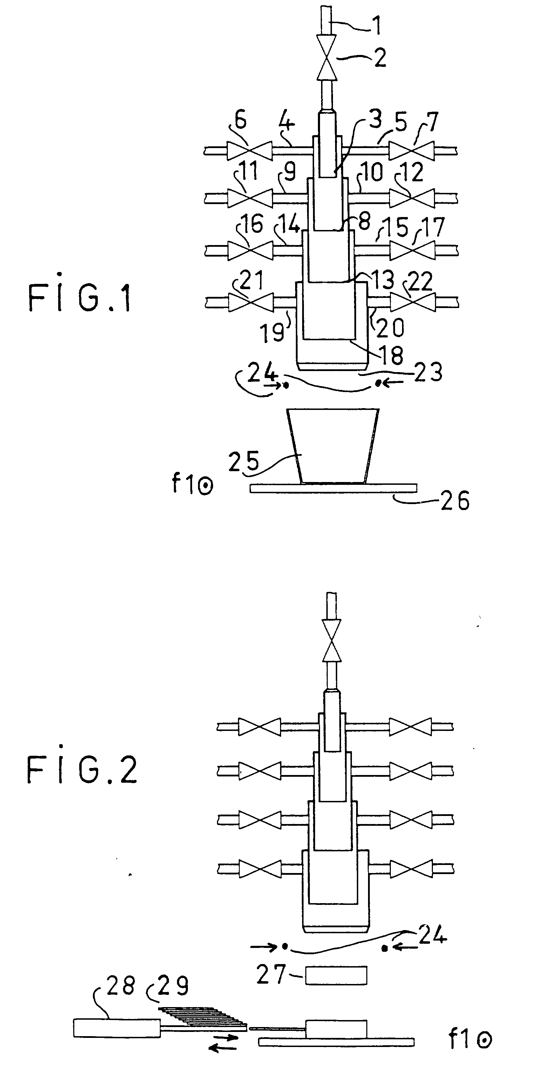

A la figure 1, une crème glacée d'un premier parfum, par exemple à la vanille, arrive verticalement par le tuyau 1 selon un débit réglé par la vanne 2 par un ajutage central 3. Une crème glacée d'un second parfum, par exemple au chocolat, arrive latéralement et de chaque côté par les tuyaux 4 et 5 selon un débit réglé par les vannes 6 et 7 dans un espace entourant l'ajutage 3 et l'ensemble des deux flux co-extrudés sort par l'ajutage 8. De la même manière, une crème glacée à la vanille arrive latéralement par les tuyaux 9 et 10, selon un débit réglé par les vannes 11 et 12 dans un espace entourant l'ajutage 8 et l'ensemble des trois flux co-extrudés sort par l'ajutage 13. De la même manière, une crème glacée au chocolat arrive latéralement par les tuyaux 14 et 15, selon un débit réglé par les vannes 16 et 17 dans un espace entourant l'ajutage 13 et l'ensemble des quatre flux co-extrudés sort par l'ajutage 18. De la même manière, une crème glacée à la vanille arrive latéralement par les tuyaux 19 et 20, selon un débit réglé par les vannes 21 et 22 dans un espace entourant l'ajutage 18 et l'ensemble des cinq flux co-extrudés sort par l'ajutage de sortie 23 et constitue le boudin final.

Les vannes 2, 6, 7, 11, 12, 16, 17, 21 et 22 peuvent être commandées indépendemment les unes des autres ou au moyen d'un seul système de commande.

Le boudin final est découpé en portions de volume adapté au contenu d'un pot par l'outil de coupe 24, puis déposé dans le pot 25, qui est en arrêt pendant toute l'opération de remplissage et qui, une fois rempli, est repris par le tapis transporteur 26 qui chemine pas à pas selon la flèche f1.

A la figure 2, l'extrusion du boudin est la même qu'à la figure 1, aux différences près que l'outil de coupe 24 fonctionne à une cadence plus élevée et découpe des tranches telles que 27, dans lequelles la bâtonneuse 28 insère au fur et à mesure un bâtonnet 29 et que le tapis 26 reprend les bâtonnets selon un cheminement continu dans la direction de la flèche fl.

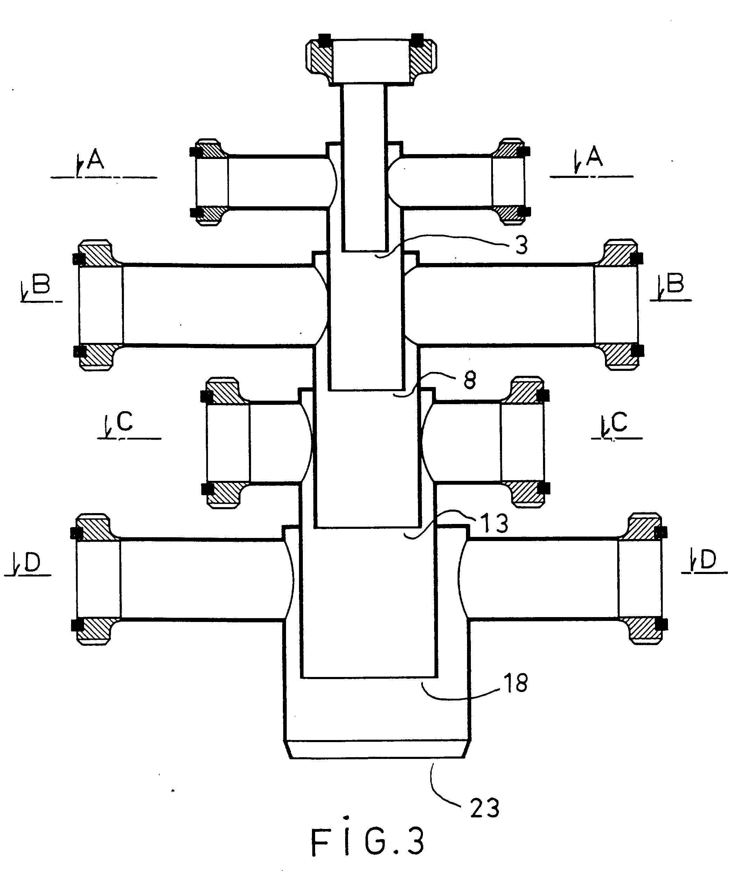

Comme c'est apparent à la figure 3, les ajutages 3, 8, 13 et 18 des buses successives sont décalés dans le plan médian de l'extrudeur par rapport à l'axe d'extrusion, donc l'axe du boudin, cependant que l'ajutage final 23 est dans l'axe du boudin.

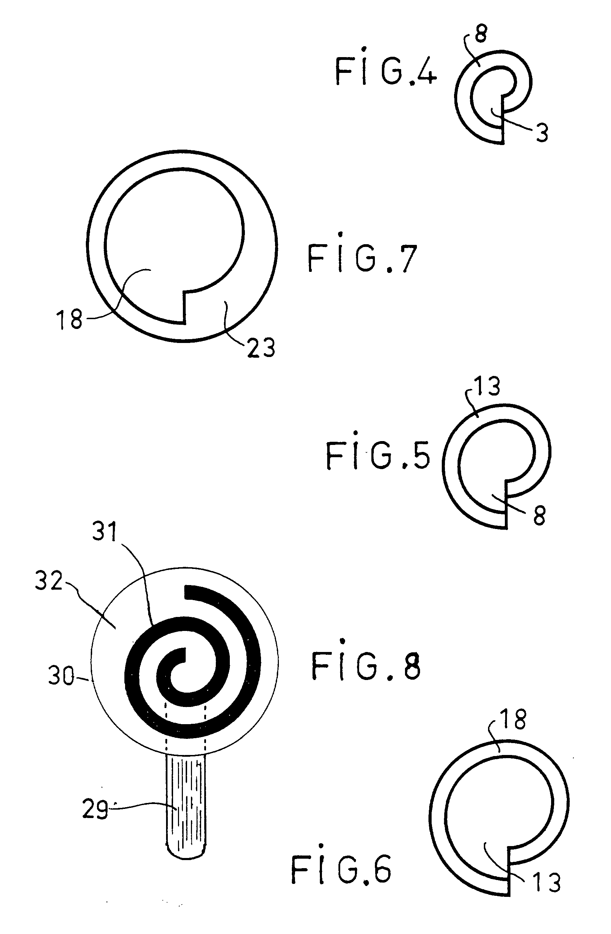

Aux figures 4 à 7, on voit que les ajutages 3, 8, 13 et 18, qui représentent également la section des buses, peuvent être décomposés chacun en deux demi-cercles tangentiels accolés par leurs diamètres dans ledit plan médian. Par contre, l'ajutage de sortie 23 est circulaire. On constate donc que les buses ont des sections qui définissent en quelque sorte le négatif du motif en spirale.

Cette configuration des buses permet la co-extrusion successive de boudins constitués uniquement de demi-cylindres accolés, donc de formes simples, sans flux préférentiel, qui serait dû au cisaillement résultant du frottement de la masse poussée contre les parois.

De préférence, la section d'un ajutage tel que 3 est sensiblement égale à la différence des surfaces 8 - 3, celle de l'ajutage 8 est sensiblement égale à la différence des surfaces 13 - 8, celle de l'ajutage 13 à la différence des surfaces 18-13 et celle de l'ajutage 18 à la différence des surfaces 23 -18, ce qui fait qu'il n'y a pas de déformation des boudins co-extrudés successifs.

A la figure 7, une tranche 30 de boudin co-extrudé, pourvue d'un bâtonnet 29, constitue une sucette glacée d'aspect décoratif avec une spirale 31, de crème glacée au chocolat, inscrite dans une masse 32 de crème glacée à la vanille.

Dans la description détaillée précédente, on a décrit des articles bi-composants à base de deux crèmes glacées. On peut fabriquer,sans sortir du cadre de l'invention, des articles composés de plusieurs crèmes glacées de couleurs et parfums distincts, par exemple jusqu'à neuf compositions glacées distinctes définissant chacune un secteur de spirale, dans la mesure où le motif en spirale appaîtrait.

On peut également juxtaposer des éléments composés de sorbets distincts ou encore de crèmes glacées et de sorbets, à la condition que leur propriétés rhéologiques soient voisines.

Les compositions glacées peuvent contenir des annexes de petites dimensions, par exemple des éclats de chocolat, ou encore contenir des marbrures de sauce ou de sirop.

De plus, une sucette glacée à base de glaces à l'eau ou de sorbets extrudables peut être enrobée d'un glaçage à l'eau, de manière à lui procurer un brillant de finition.

## Revendications

1. Procédé de fabrication de confiserie glacée par co-extrusion de compositions glacées de parfums et couleurs distincts pour former un boudin cylindrique ayant en son coeur un motif en spirale, caractérisé par le fait que l'on extrude verticalement les compositions glacées alternativement par des buses successives emboitées les unes dans les autres et de section progressive, que chaque buse est formée de deux demi-coquilles cylindriques de section différentes, accolées par un plan médian du boudin et que la section des buses est constituée par deux demi-cercles tangentiels accolés par leurs diamètres dans ledit plan médian, à l'exception de la dernière buse de sortie dont la section est circulaire.

2. Procédé selon la revendication 1, caractérisé par le fait que les compositions glacées sont des crèmes glacées proprement dites, plus ou moins aérées ou des sorbets ou des glaces à l'eau extrudables, pas ou peu aérés.

3. Procédé selon la revendication 1 ou 2, caractérisé par le fait que le boudin est découpé en portions à la sortie du dispositif d'extrusion pour être ensuite introduit dans des récipients qui se présentent successivement sous le dispositif et une portion constitue alors le volume exact de remplissage du récipient en question.

4. Procédé selon la revendication 1 ou 2, caractérisé par le fait que l'on découpe le boudin en tranches que l'on dépose sur des plaques froides cheminant en continu sous le dispositif d'extrusion et dans lesquelles on insére latéralement un bâtonnet de manière à produire des sucettes glacées.

5. Dispositif d'extrusion de confiserie glacée par co-extrusion de compositions glacées de parfums et couleurs distincts pour former un boudin cylindrique ayant en son coeur un motif en spirale, caractérisé par le fait qu'il comprend des buses successives emboitées les unes dans les autres et de section progressive, que, chaque buse est formée de deux demi-coquilles cylindriques de section différentes, accolées par un plan médian du boudin et que la section des buses est constituée par deux demi-cercles tangentiels accolés par leurs diamètres dans ledit plan médian, à l'exception de la dernière buse de sortie dont la section est circulaire.

6. Article de confiserie glacée extrudé de forme généralement cylindrique, caractérisé par le fait qu'il est constitué d'au moins deux compositions glacées de parfum et couleur contrastés et que celles-ci définissent dans sa section transversale un motif représentant une spirale inscrite dans un cercle.

7. Article selon la revendication 6, caractérisé par le fait qu'il est sous la forme d'un pot généralement cylindrique avec un faible angle de dépouille, contenant un boudin cylindrique de compositions glacées dans la section duquel s'inscrit une spirale.

8. Article selon la revendication 6, caractérisé par le fait qu'il est sous forme d'une sucette glacée comprenant une tranche cylindrique découpée à partir d'un boudin extrudé de compositions glacées, dans la section de laquelle s'inscrit une spirale et dans laquelle est disposé un bâtonnet.

## Patentansprüche

1. Verfahren zur Herstellung von Speiseeis durch Koextrusion von Eiszusammensetzungen mit unterschiedlichen Aromen und Farben zur Bildung eines zylindrischen Strangs, der in seinem Kern ein spiralförmiges Motiv aufweist, dadurch gekennzeichnet, daß man die Eiszusammensetzungen vertikal abwechselnd durch aufeinanderfolgende ineinandergesteckte Düsen mit zunehmendem Querschnitt extrudiert, daß jede Düse von zwei zylindrischen Schalenhälften mit verschiedenen Querschnitten geformt wird, die längs einer Mittelebene des Strangs aneinandergesetzt sind, und daß der Querschnitt der Düsen aus zwei tangentialen Halbkreisen gebildet ist, die mit ihren Durchmessern in dieser Mittelebene aneinandergesetzt sind, und zwar mit Ausnahme der letzten Austrittsdüse, deren Querschnitt kreisförmig ist.

2. Verfahren nach Anspruch 1, dadurch gekennzeichnet, daß die Eiszusammensetzungen eigentliche Eiscremes mit mehr oder weniger hohem Lufteinschlag oder extrudierbare Sorbet- oder Wassereisprodukte ohne oder mit geringem Lufteinschlag sind.

3. Verfahren nach Anspruch 1 oder 2, dadurch gekennzeichnet, daß der Strang am Austritt aus der Extrusionsvorrichtung in Teilstücke geschnitten wird, um dann in Behälter eingebracht zu werden, die nacheinander unter der Vorrichtung zugeführt werden, wobei ein Teilstück das genaue Füllvolumen des betreffenden Behälters bildet.

4. Verfahren nach Anspruch 1 oder 2, dadurch gekennzeichnet, daß man den Strang in Scheiben schneidet, die auf kalte Platten, die unter der Extrusionsvorrichtung kontinuierlich vorbeilaufen, aufgelegt werden und in die seitlich zur Bildung von Eislutschern ein Stab eingeführt wird.

5. Vorrichtung zur Extrusion von Speiseeis durch Koextrusion von Eiszusammensetzungen mit verschiedenen Aromen und Farben zur Bildung eines zylindrischen Wulstes, der in seinem Kern ein spiralförmiges Motiv aufweist, dadurch gekennzeichnet, daß sie aufeinanderfolgende ineinandergesteckte Düsen mit steigenden Querschnitt aufweist, daß jede Düse aus zwei zylindrischen Schalenhälften mit verschniedenem Querschnitt besteht, die in einer Mittelebene des Strangs aneinandergesetzt sind, und daß der Querschnitt der Düsen aus zwei tangentialen Halbkreisen besteht, die mit ihren Durchmessern in dieser Mittelebene aneinandergesetzt sind, und zwar mit Ausnahme der letzen Austrittsdüse, deren Querschnitt kreisförmig ist.

6. Extrudierter Speiseeisartikel von allgemein zylindrischer Form, dadurch gekennzeichnet, daß er aus mindestens zwei Eiszusammensetzungen mit kontrastierenden Aromen und Farben besteht und daß diese in seinem Querschnitt ein Motiv bilden, das eine einem Kreis eingeschriebene Spirale darstellt.

7. Artikel nach Anspruch 6, dadurch gekennzeichnet, daß er in Form eines allgemein zylindrischen Topfs mit einem kleinen Konizitätswinkel vorliegt, der einen zylindrischen Strang von Eiszusammensetzungen enthält, in dessen Querschnitt eine Spirale eingeschrieben ist.

8. Artikel nach Anspruch 6, dadurch gekennzeichnet, daß er in Form eines Eislutschers vorliegt, der aus einer von einem extrudierten Strang von Eiszusammensetzungen abgeschnittenen zylindrischen Scheibe besteht, in deren Querschnitt eine Spirale eingeschrieben ist und in der ein Stab angeordnet ist.

## Claims

1. Process for manufacturing ice confectionery by co-extruding ice compositions with distinct flavours and colours to form a cylindrical rope having at its core a spiral pattern, characterized in that the ice compositions are vertically extruded alternately by successive nozzles nesting one inside the other and having a progressive cross-section, in that each nozzle is formed of two cylindrical half-shells with different cross-sections, attached along a middle plane of the rope and in that the cross-section of the nozzles consists of two tangential semicircles attached along their diameters in the said middle plane, with the exception of the last outlet nozzle of which the cross-section is circular.

2. Process according to claim 1, characterized in that the ice compositions are ice creams properly so called, aerated to a varying extent or sorbets or extrudable water ices, which are not aerated or are slightly aerated.

3. Process according to claim 1 or 2, characterized in that the rope is cut into portions at the outlet from the extrusion device so as then to be introduced into containers which are presented successively under the device and one portion then constitutes the exact volume for filling the container in question.

4. Process according to claim 1 or 2, characterized in that the rope is cut into slices which are deposited onto cold plates passing continuously under the extrusion device and into which a stick is inserted laterally so as to produce ice lollies.

5. Device for extruding ice confectionery by co-extruding of ice compositions with distinct flavours and colours to form a cylindrical rope having at its core a spiral pattern, characterized in that it comprises successive nozzles nesting one inside the other and having a progressive cross-section, in that each nozzle is formed of two cylindrical half-shells with different cross-sections, attached along a middle plane of the rope and in that the cross-section of the nozzles consists of two tangential semicircles attached along their diameters in the said middle plane, with the exception of the last outlet nozzle of which the cross-section is circular.

6. Article of ice confectionery extruded in a generally cylindrical form, characterized in that it consists of at least two ice compositions with contrasting flavours and colours and in that these define within its transverse section a pattern representing a spiral inscribed in a circle.

7. Article according to claim 6, characterized in that it is in the form of a generally cylindrical pot with a small angle of taper, containing a cylindrical rope of ice compositions in the cross-section of which a spiral is inscribed.

8. Article according to claim 6, characterized in that it is in the form of an ice lolly comprising a cylindrical slice cut from an extruded rope of ice compositions, in the cross-section of which a spiral is inscribed and in which a stick is positioned.
